## Europäisches Patentamt

## European Patent Office

## Office européen des brevets

(19)

(11) Veröffentlichungsnummer: **0 034 656**
**B1**

(12) **EUROPÄISCHE PATENTSCHRIFT**

(45) Veröffentlichungstag der Patentschrift:
**29.06.83**

(51) Int. Cl.³: **G 01 G 3/14**, G 01 L 1/22

(21) Anmeldenummer: **80107686.0**

(22) Anmeldetag: **06.12.80**

(54) Plattformwaage und Verfahren zur Herstellung solcher Plattformwaagen.

(30) Priorität: **19.12.79 US 105157**

(43) Veröffentlichungstag der Anmeldung:
**02.09.81 Patentblatt 81/35**

(45) Bekanntmachung des Hinweises auf die Patenterteilung:
**29.06.83 Patentblatt 83/26**

(84) Benannte Vertragsstaaten:
**BE DE FR GB NL SE**

(56) Entgegenhaltungen:
**DE-A-2 617 987**
**DE-A-2 740 668**
**FR-A-2 331 775**
**US-A-3 004 231**
**US-A-3 135 112**
**US-A-3 439 761**
**US-A-4 125 168**

(73) Patentinhaber: **HOTTINGER BALDWIN MESSTECHNIK GMBH, Im Tiefen See 45 Postfach 42 35, D-6100 Darmstadt (DE)**

(72) Erfinder: **Lockery, Harry E., 115 Moore Road, Sudbury Massachusetts 01776 (US)**

(74) Vertreter: **Brand, Fritz, Dipl.-Ing. et al, Hottinger Baldwin Messtechnik GmbH Patentabteilung Im Tiefen See 45 Postfach 42 35, D-6100 Darmstadt (DE)**

ACTORUM AG

Plattformwaage und Verfahren zur Herstellung solcher Plattformwaagen

Die vorgelegte Erfindung bezieht sich auf ein Verfahren zur Herstellung einer Plattformwaage, bei dem Dehnungsmessstreifen auf mit einer Plattform verbundenen Balkenelementen appliziert und zu einer Wheatstone'schen Brücke verschaltet werden sowie auf solche Plattformwaagen.

Elektronische Waagen gemäss der bisher bekannten Art sind mit Dehnungsmessstreifen-Aufnehmern ausgerüstet, die separat hergestellt und danach mit einer Plattform aus die verschiedensten Arten verbunden werden. Typischerweise wird eine Plattformkonstruktion in jeder Ecke auf einem einzelnen Aufnehmer gelagert, der zwischen der eigentlichen Plattform und dem Fundament angeordnet ist. In einer anderen bereits bekannten Art von Waagen ist die Plattformkonstruktion mit dem Fundament verbunden durch Biegeelemente, und die Last auf der eigentlichen Plattform wird erfasst durch einen einzigen Aufnehmer, der zwischen der oberen Plattform und der Fundamentkonstruktion angeschlossen ist. In einer weiteren Version trägt ein einziger Aufnehmer eine obere Plattform auf einem Fundament, und die Biegeelemente sind ein Bestandteil des einzelnen Aufnehmers. Falls vier einzelne Aufnehmer zur Lagerung der Plattform auf einem Fundament benötigt werden, wird normalerweise in jeder Ecke ein Aufnehmer montiert. Diese Art von Konstruktion ist ziemlich teuer, da vier einzelne Aufnehmer produziert werden müssen, und es ist kostspielig, jeden Aufnehmer mit der präzisen Kompensation und kalibrierten Eingenschaften, die für präzises Wägen erforderlich sind, zu versehen. Sobald die einzelnen Aufnehmer, die obere Plattform und das Fundament zusammengebaut sind, ist es wiederum kostspielig, da die Gesamtanordnung nochmals kalibriert und abgeglichen werden muss, damit Einflüss exzentrischer Belastung möglichst gering gehalten werden. Die zusätzlichen elektronischen Bauelemente, die für das Verringern der Effekte von unsymmetrischer Belastung erforderlich sind, tragen auch dazu bei, dass die Kosten steigen.

Während in der bisher bekannten Bauweise, wo die Plattform mit dem Fundament durch Biegeelemente verbunden ist, die Anzahl der Aufnehmer reduziert wird, müssen jedoch die Biegeelemente und das Fundament sorgfältig miteinander verbunden werden, in der Art, dass der einzelne Aufnehmer nur die senkrechte Last erfasst, die auf die obere Plattform aufgebracht wird. Man hat gefunden, dass es schwierig ist, zeitaufwendig und teuer, derartige Waagen unempfindlich gegen aussermittige Belastung zu machen. Zu einem grossen Teil treffen diese Überlegungen auch zu bei einer weiteren Konstruktion bisher bekannter Art, bei der die Biegeelemente Bestandteile des einzelnen Aufnehmers sind. Diese Art der Konstruktion ist auch empfindlich gegen aussermittige Lasten, falls nicht teure mechanische oder elektronische Justierungen zur Reduzierung des Einflusses der aussermittigen Last gemacht werden.

In vielen Konstruktionen bisher bekannter Art ist ein Schutz gegen Überlastung nicht gegeben, oder falls vorhanden, nur mit beträchtlichem Aufwand möglich.

In Anbetracht des oben gesagten ist es das Ziel der Erfindung, wie sie in den Ansprüchen gekennzeichnet ist, die folgenden Zwecke einzeln oder in Kombination zu erreichen:

die Vereinfachung der Herstellung von Waagen der beschriebenen Art durch das Zusammenfassen der Plattformkonstruktion und des Dehnungsmessstreifen-Aufnehmers (der Dehnungsmessstreifen-Aufnehmer) in einer einheitlichen Struktur;

die Verringerung der Kosten derartiger Waagen und die Vereinfachung ihrer Kalibrierung, wobei gleichzeitig Funktion und Genauigkeit garantiert wird, die wenigstens gleichwertig ist mit vergleichbaren Waagen der bisher bekannten Art;

der Bau der Waage in einer Weise, dass deren Ausgangssignal weitgehend unabhängig von der Lage der Last, die auf die Waage aufgebracht wird, ist; oder anders ausgedrückt, unempfindlich gegen aussermittiges Anbringen der Last;

das Verfügbarmachen eines Überlastschutzes, welcher die Biegung der einzelnen Biegestabaufnehmer begrenzt;

die Lagerung der integrierten Struktur(en) aus Waageplattform und Biegestabaufnehmer in einer Art, dass die gewünschte Art von Auslenkung des integrierten Aufnehmers erreicht wird, wodurch die Linearitätscharakteristik und die Hystereseeffekte optimiert und die Einflüsse von Stossbelastungen auf die Waage minimiert werden.

Zur Lösung dieser Aufgabe ist eine Wiegeeinrichtung der eingangs genannten Art gemäss dem Kennzeichen des Anspruchs 4 ausgestaltet. Es wird also eine Wiegeeinrichtung vorgesehen, die eine Plattform und Dehnungsmessstreifen-Aufnehmer umfasst, welche als Bestandteil oder Bestandteile der Plattform konstruiert sind. Jeder der stabartigen Dehnungsmessstreifen-Aufnehmer hat ein freies Ende und ein festes Ende, das in die Plattform übergeht. Die Dehnungsmessstreifen-Elemente sind in Wirkverbindung mit den Stabstrukturen. Montagefüsse, vorzugsweise aus nachgiebigem Material, sind mittels Abstandselementen an den freien Enden der Stabstrukturen verbunden, und dienen zur Lagerung der Wiegeeinrichtung auf der Montagefläche.

Zur Lösung der genannten Aufgabe wird auch ein Herstellungsverfahren der eingangs genannten Art vorgesehen, das gemäss dem Anspruch 1 durch die nachfolgenden Schritte gekennzeichnet ist. Es wird eine Vielzahl von Löchern in die Plattform gebohrt, die jeweils in Vierergruppen angeordnet sind. Danach wird eine Vielzahl von Schlitzen aus der Plattform herausgearbeitet, so dass sie von den Kanten der Plattform einwärts zeigen, und zwar jeweils zwei parallel zueinander; jeder Schlitz verbindet zwei Löcher. Auf diese Art bilden zwei Schlitze eine Struktur in der Art eines einseitig eingespannten Biegebalkens als integraler Bestandteil der Plattform. Danach werden Dehnungsmessstreifen an der Balkenstruktur befestigt, z. B. in der Gegend zwischen zwei benachbarten Löchern. Dann werden die Dehnungsmessstreifen elektrisch verbunden mit den auf den anderen Balkenstrukturen befestigten Dehnungsmessstreifen, so dass eine elektromechanisch wirksame Wägestruktur entsteht.

Damit die Erfindung klar verstanden wird, wird sie nachstehend beispielsweise anhand der schematischen Figuren beschrieben. Es zeigen:

Figur 1 perspektivisch eine Wägeplattform gemäss der Erfindung mit Balkenstrukturen, die einen integralen Bestandteil der Plattform bilden, wobei jedoch die Darstellung nicht entsprechend tatsächlicher Masse oder Abmessungen gezeichnet ist.

Figur 2 eine Schnittansicht entlang der Schnittlinie 2-2 aus Figur 1 bei unbelasteter Waage;

Figur 3 ist eine Sicht ähnlich Fig. 2, jedoch wird nur eine der Balkenstrukturen gezeigt, in einem vergrösserten Massstab und einer Biegung infolge Belastung der Waage unterworfen, wobei jedoch die Auslenkung des Balkens übertrieben dargestellt ist und die Auslenkung der Klammer nicht gezeigt wird zwecks Vereinfachung der Darstellung;

Figur 4 ist eine perspektivische Sicht auf ein Ende einer Waage gemäss der Erfindung, die mit einer Schutzhaube versehen ist;

Figur 5 ist eine Schnittansicht entlang der Schnittlinie 5 - 5 in Fig. 4;

Figur 6 zeigt die Draufsicht einer rechteckigen Wägeplattform, in welcher die Balkenstrukturen im wesentlichen diagonal in die Wägeplattform weisen;

Figur 7 zeigt die Draufsicht einer quadratischen Wägeplattform, in welcher die Balkenstrukturen wechselweise in rechtem Winkel zu den anderen Balkenstrukturen zeigen;

Figur 8 zeigt die Draufsicht einer rechteckigen Wägeplattform, bei der die Balkenstrukturen parallel zu den längeren Seiten der Plattform liegen;

Figur 9 ist eine Seitenansicht der Waage gemäss Figur 8, Figur 10 zeigt die Draufsicht einer Wägeplattform, die eine kreisrunde Form hat;

Figur 11 zeigt die Draufsicht einer rechteckigen Wägeplattform, bei der die Balkenstrukturen in der Mitte und im rechten Winkel zu jeder Seite der Plattform angeordnet sind;

Figur 12 zeigt die Ansicht in Richtung des Pfeiles A in Figur 1, im Wesentlichen in Richtung der Längsachse der Balkenstruktur mit Teilen der Waage abgebrochen gezeichnet;

Figur 13 zeigt eine Ansicht in Richtung des Pfeiles B in Figur 12;

Figur 14 ist eine Ansicht ähnlich zu jener der Figur 12, jedoch zeigt sie eine Fusskonstruktion, die gleichzeitig als eine Überlastbegrenzung wirkt;

Figur 15 ist ein Schaltbild der Brückenschaltung aus Dehnungsmessstreifen-Elementen, die gemäss der Erfindung angeordnet sind;

Figur 16 ist eine Seitenansicht einer Verwirklichung mit einer Deckplatte, wobei letztere im Schnitt gezeigt wird;

Figur 17 zeigt eine Ansicht ähnlich der von Figur 16, jedoch mit einer Zwischenplatte zur Lastverteilung zwischen der Deckplatte und der Waagenplattform;

Figur 18 zeigt eine Seitenansicht von einer Waage ähnlich der aus Figur 17, jedoch ohne Abdeckung und ohne Lastbegrenzungselemente;

Figur 19 zeigt eine Draufsicht der Waage gemäss Figur 18 und illustriert die Lage der Lasteinleitungspunkte.

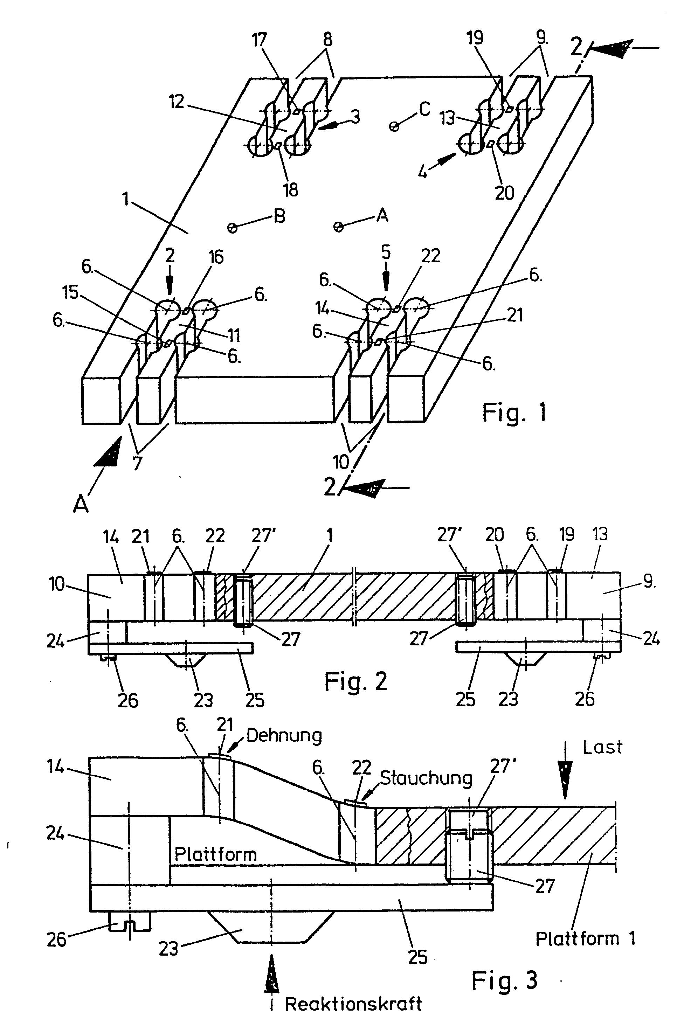

Fig. 1 zeigt ein bevorzugtes Ausführungsbeispiel der Erfindung. Eine Wägeplattform 1 aus Metall, z. B. aus den Aluminiumlegierungen 2024-T351 oder 7075-T651, die geeignet sind für Waagen kleiner Kapazität. Eine geeignete Dicke für die Plattform 1 wäre z. B. etwa 6 bis 7 mm. Für Wagen grösserer Kapazität würde man Plattformen aus Stahlguss verwenden. Vier Gruppen 2, 3, 4 und 5 von Löchern 6 werden vollständig durchgebohrt durch die Plattform 1. Die Anordnung dieser Lochgruppen in der Plattform und die Abstände der Löcher untereinander können verschieden sein, wie weiter unter noch beschrieben wird. In Fig. 1 sind die Löcher im wesentlichen in der Nähe einer Ecke der Plattform 1 angeordnet. Ein passender Abstand zwischen benachbarten Löchern 6 und zwischen den Lochwandungen möge 8 bis 9 mm sein.

Weiterhin werden die Schlitzpaare 7, 8, 9 und 10 in die Plattform geschnitten, z. B. durch Sägen, so dass jeder Schlitz von einer Kante der Plattform aus einwärts weist und zwei Löcher mit der Kante verbindet, wodurch vier Balkenelemente 11, 12, 13 und 14 ausgeformt werden als integraler Teil der Plattformstruktur.

Dehnungsmessstreifen 15 und 16 werden konventionell befestigt, z. B. durch eine Klebeverbindung, auf dem Balkenelement 11. Diese Dehnungsmessstreifen sind vorzugsweise zwischen den Löchern 6 angeordnet. In ähnlicher Weise sind die Dehnungsmessstreifen 17 und 18 auf dem Balkenelement 12 angeordnet. Die Dehnungsmessstreifen 19 und 20 sind auf dem Balkenelement 13 befestigt. Dehnungsmessstreifen 21 und 22 sind auf der Balkenstruktur 14 befestigt.

Die Abmessungen der Löcher und die Dicke der Plattform sowie die Breite der Schlitze hängt ab von der gewünschten Kapazität der Waage. Diese Abmessungen werden mit gebührender Berücksichtigung der Waagenkapazität und der Empfindlichkeit in fachmännischer Weise ausgewählt.

Fig. 2 zeigt die Schnittansicht entlang der Schnittlinie 2 - 2 in Fig. 1, wodurch die Balkenelemente 13 und 14 ohne Belastung illustriert werden. Die Schnittfläche erstreckt sich durch die Löcher 6 und die Schlitze 9 und 10, wodurch die geschnittene Fläche mittig und längsweise durch die entsprechenden Schlitze hindurchgeht.

Ausserdem zeigt die Fig. 2 eine mögliche Auflagekonstruktion einschliesslich der Füsse 23, welche vorzugsweise aus einem nachgiebigen Material, wie z. B. Gummi oder ähnlichem, hergestellt sind und an dem jeweiligen freien Ende befestigt sind, das benachbart ist zu der Plattformkante der entsprechenden Balkenelemente 13, 14. Die Verbindung wird hergestellt durch ein Abstandsstück 24 und eine Lastklammer 25. Obwohl Fig. 2 nur zwei Auflagekonstruktionen 23, 24, 25 zeigt, sind doch vier dieser Strukturen vorhanden, je eine in jeder Ecke. Das äussere Ende von jeder Klammer 25 ist mittels Verbindungselementen 26, z. B. Schrauben o. ä., an dem Abstandsstück 24 befestigt. Das innere Ende von jeder Klammer 25 reicht genügend weit einwärts in Bezug auf die Plattform 1, so dass es mit einem Überlastbegrenzer 27 zusammenarbeitet, welche eine einstellbare Schraube in einem Gewindeloch 27' sein kann, so dass die maximale Biegung der entsprechenden Balkenelemente begrenzt wird. Die Einstellung des Abstandes zwischen dem freien inneren Ende jeder Klammer 25 und der Überlastsicherung 27 geschieht in der Art, dass das Abstandsstück eine Biegung der Balkenstruktur gestattet, die gerade geringfügig über der Nennbelastung für jede Ecke liegt.

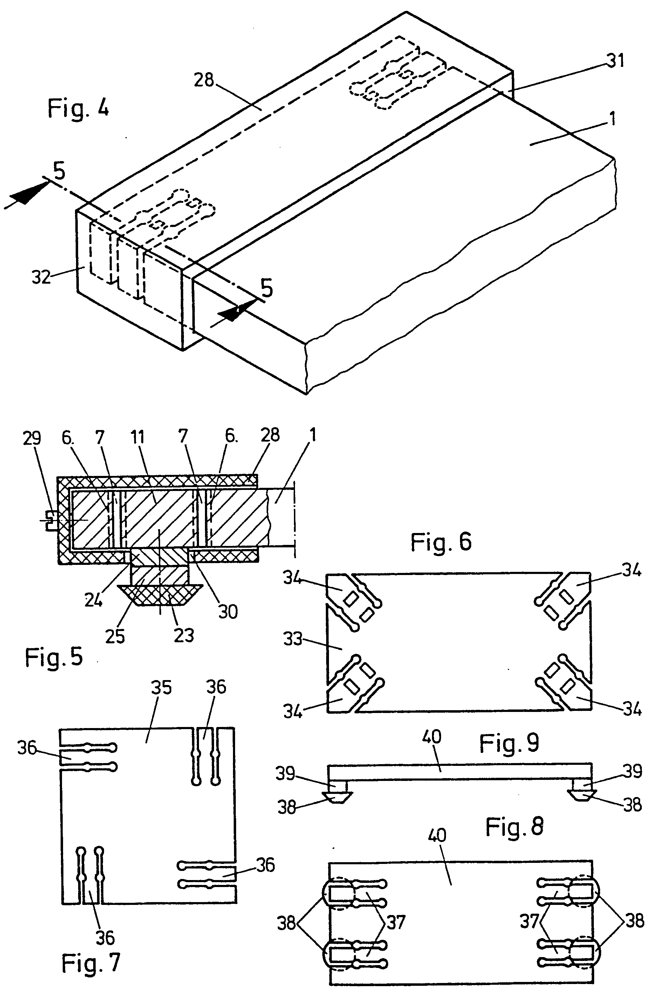

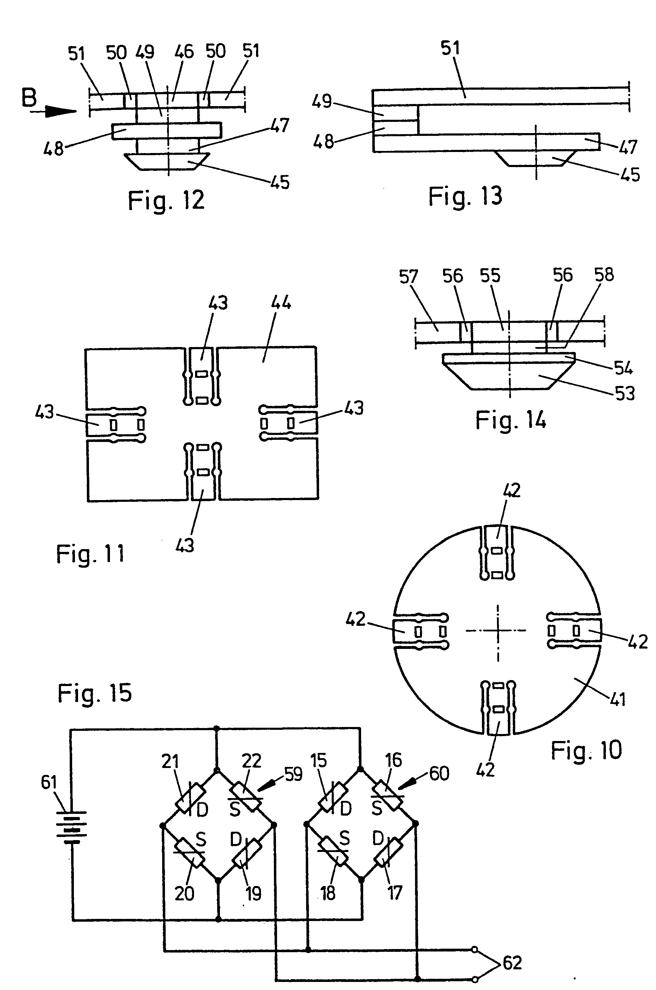

Fig. 3 zeigt die linke Ecke aus Fig. 2 in einem vergrösserten Massstab unter maximaler Belastung, so dass das freie Ende der Klammer 25 den Überlastanschlag 27 berührt und das Balkenelement etwa in «S»-Form gebogen wird. Demzufolge wird der Dehnungsmessstreifen 21 einer Dehnung unterworfen und der Dehnungsmessstreifen 22 einer Stauchung. Die Art der Auslenkung, wie sie in Fig. 3 gezeigt wird, optimiert die Linearitätscharakteristik des Balkens und der zugehörigen Dehnungsmessstreifen. Die weitere Funktionsweise der vorliegenden Waage wird im folgenden unter Bezugnahme auf das Schaltbild gemäss Fig. 15 beschrieben.

Die Fig. 4 und 5 zeigen eine Schutzhaube 28, die an den Enden der Plattform 1 zum Schutz der Balkenelemente, der Dehnungsmessstreifen und der elektrischen Verbindungen befestigt ist. Die Schutzhaube 28 möge an der Plattform 1 mittels der Schrauben 29 befestigt sein. Die Füsse 23 der Auflagekonstruktionen 23, 24, 25 erstrecken sich durch ein Loch 30 in der Schutzhaube 28. Die schützenden Schutzhauben können aus extrudiertem Plastik- oder Aluminiummaterial gefertigt sein und können z. B. einen rechteckingen, röhrenförmigen Querschnitt haben und an einer Seite des Querschnitts geschlitzt sein, um die Plattform 1 aufzunehmen. Die Enden 31 und der Schutzhaube 28 sind auch geschlossen, um einen möglichst vollständigen Schutz zu erzielen.

In Fig. 6 wird eine schematische Draufsicht auf eine Plattformqaage 33 gezeigt, in welcher die Balkenelemente 34 mit ihrer Längsachse unter einem Winkel zur Kante der Plattform 33 stehen.

In Fig. 7 ist die Plattform 35 quadratisch geformt und die Balkenelemente erstrecken sich mit ihrer Längsachse senkrecht zu den Quadratseiten, in welche sich Schlitze öffnen, und parallel zu der nächsten, benachbarten Seite. Diese Anordnung der Balkenelemente kann auch bei rechteckigen Plattformen verwendet werden.

Bei beiden wurde festgestellt, dass die Fehler, die von aussermittiger Belastung herrühren, verringert werden. So werden z. B. die Aussermittigkeitsfehler bei einer rechteckigen Plattformwaage mit den Abmessungen 355 mm x 457 mm beträchtlich reduziert durch die besondere Anordnung der Balkenelemente wie sie in Fig. 6 und 7 gezeigt werden.

In den Figuren 8 und 9 sind die Balkenelemente wie in Fig. 1 ausgerichtet, die Füsse 38 sind durch ein Abstandsstück 39 mit den betreffenden Balkenelementen 37 verbunden, die wiederum einen integralen Bestandteil der Plattform 40 bilden. Diese Anordnung der Füsse 38 vermeidet den Gebrauch der Klammern 25, die normalerweise verwendet werden, um die gewünschte Biegecharakteristik des Balkens zu erzielen und die Linearität zu optimieren. Während das Weglassen der Klammer 25 einen Kompromiss bezüglich der Linearität bedeutet, so ist doch das Gesamtverhalten ziemlich zweckentsprechend für viele Anwendungen.

Fig. 10 zeigt eine Plattform 41 in Kreisform. Jedoch könnte die Plattform auch eine Form mit beliebigen Umrisskurven haben, z. B. elliptisch geformt sein. Jedenfalls sollten die Balkenelemente 42 vorzugsweise radial nach innen zeigen und um 90° gegeneinander versetzt sein.

In Fig. 11 sind die Balkenelemente 43 im wesentlichen mittig im Bezug auf die Seiten der rechtekkigen oder quadratischen Plattform 44 angeordnet.

Die Figuren 12 und 13 zeigen modifiziert Ausführungen der Überlastanschläge. Der Fuss 45 ist mit dem freien Ende des Balkenelementes 46 durch eine Klammer 47 verbunden, ausserdem durch ein Überlastschutz-Element 48 und ein dünnes Ausgleichsblech 49. Die Länge des Überlastschutz-Elementes ist grösser als die Breite des Balkenelementes 46 und der beiden benachbarten Öffnungen 50 zusammen, so dass die freien Enden des Überlastschutz-Elementes 48 die Plattform 51 auf beiden Seiten des Balkenelementes 46 berührt, sobald die Last auf dem Balkenelemente die höchste gewünschte Auslenkung bewirkt. Die erlaubte Biegung des Balkenelementes 46 wird durch die Dicke des Ausgleichsblechs 49 bestimmt. Auf diese Weise wird eine eventuelle Überlast an dem Balkenelemente 46 vorbeigeleitet und von der Plattform 51 aufgenommen.

In Fig. 14 ist der Fuss 53 mit dem freien Ende des Balkenelementes 55 durch ein Überlastschutz-Element 54 und ein dünnes Ausgleichsblech 58 verbunden. Das Überlastschutz-Element 58 ist in horizontaler Richtung breiter als das Balkenelement 55 und die Öffnungen bzw. Schlitze 56 in der Plattform zusammengerechnet. Auf diese Weise wirkt der Fuss 53 zusammen mit seinem Überlastschutz-Element 54 sowohl als Auflage als auch als Überlastschutz. Diese Anordnung ist so ähnlich wie diejenige, die im Zusammenhang mit den Figuren 12 und 13 beschrieben wurde, jedoch wurde die Klammer 47 weggelassen. Die Funktionsweise der Erfindung soll jetzt mit besonderem Bezug auf die Fig. 1, 3 und 15 beschrieben werden. Erfindungsgemäss wird jedes Balkenelement mit zwei Dehnungsmessstreifen ausgerüstet. Wie in Fig. 3 gezeigt, werden die Dehnungsmessstreifen 21 und 22 gedehnt bzw. gestaucht, sobald sich das betreffende Balkenelement unter einer Last verbiegt. Fig. 3 zeigt die Verbiegung des Balkens 14 in übertriebener Weise zwecks einfacherer Illustration. Selbstverständlich wird sich die Klammer 25 auch etwas durchbiegen, was aber nicht dargestellt wird, weil es für die Erfindung nicht von Bedeutung ist. In den anderen Balkenelementen 11, 12, 13, die noch in der Wage vorhanden sind, werden ähnliche Dehnungszustände entwickelt und durch Dehnungsmessstreifen gemessen. Jedes Dehnungsmessstreifen-Paar ist elektrisch mit einem anderen Dehnungsmessstreifen-Paar verbunden und bildet eine Wheatstone'sche Brücke gemäss der Darstellung in Fig. 15. Mit Bezug auf die Fig. 1 und 15 ist zu sehen, dass die Dehnungsmessstreifen-Paare auf den Balkenelementen 13 und 14 zu einer Wheatstone'schen Brükke 59 verbunden sind. Die Dehnungsmessstreifen-Paare auf den Balkenelementen 11 und 12 sind zu einer zweiten Wheatstone'schen Brücke 60 verbunden.

Mit der gerade beschriebenen Art der Verbindung vereinigen sich die durch die einzelnen Dehnungsmessstreifen, die in einer Wheatstone'schen Brücke verschaltet sind, gemessenen Dehnungen sowie die Widerstandsänderungen in den Dehnungsmessstreifen, die durch solche Dehnungen verursacht werden, so dass eine Signalspannung entsteht, sobald die Brücke in geeigneter Weise gespeist wird, die eine direkte Funktion der Summe der Lasten auf jeder der beiden Balkenelemente ist. In ähnlicher Weise entsteht eine Spannung in der zweiten Wheatstone'schen Brücke.

Die beiden Wheatstone'schen Brückenschaltungen 59 und 60 sind parallel an eine gemeinsame Spannungsversorgung 61 angeschlossen. Die Ausgangsklemmen der Brücken 59 und 60 sind an gemeinsame Ausgangsklemmen 62 angeschlossen. Mit dieser Parallelschaltung der Wheetstone'schen Brücken wird ein Ausgangssignal an den Anschlüssen 62 erzeugt, das dem Mittelwert der Ausgangssignale der einzelnen Wheatstone'schen Brücken 59 und 60 entspricht. Damit ist im wesentlichen das Ausgangssignal proportional zu der Summe der Lasten, die durch die einzelnen Balkenelemente mit ihren Dehnungsmessstreifen, die kombiniert und verschaltet sind in den Brücken 59 und 60, erfasst werden. Diese Art der parallelen Addition durch die Mittelung des Ausgangssignals von Wheatstone'schen Brücken ist der Technik bekannt.

Für jemanden, der in der Technik fachmännisch bewandert ist, ist es einzusehen, dass andere Kombinationen von Dehnungsmessstreifen-Paaren mit im wesentlichen gleichen Resultaten verwendet werden können. Während in der vorstehenden Beschreibung die Dehnungsmessstreifen auf den Balkenelementen 13 und 14 sowie diejenigen auf den Elementen 11 und 12 verbunden waren, wäre es gleichermassen zufriedenstellend, die Dehnungsmessstreifen auf den Elementen 12 und 13 und ähnlich auch die Dehnungsmessstreifen auf den Elementen 11 und 14 zu verbinden. In ähnlicher Weise wäre es gleichfalls zufriedenstellend, die Dehnungsmessstreifen auf den Elementen 11 und 13 sowie Dehnungsmessstreifen auf den Balkenelementen 12 und 14 miteinander zu verbinden. Physikalische und geometrische Betrachtungen legen im allgemeinen fest, welche Wahl der Verbindung in einer bestimmten Konstruktion von Vorteil ist.

Nimmt man an, dass die Lastempfindlichkeit sämtlicher Dehnungsmessstreifen-Paare und ihrer zugehörigen Balkenelemente identisch sind, so ist die Funktion der integrierten Waagenstruktur wie folgt. Wird die Waage im Punkt «A» zentral mit der Last bzw. dem zu messenden Gewicht belastet, so nimmt jedes Balkenelement eine identische Last auf entsprechend einem Viertel der aufgelegten Last. Die Dehnungsmessstreifen auf jeden der Balkenelemente 11, 12, 13 und 14 messen gleiche Dehnungen und Stauchungen. Die resultierenden Widerstandsänderungen der Dehnungsmessstreifen im Zusammenhang mit der angelegten Brückenspeisespannung erzeugen an den Ausgängen der Wheatstone'schen Brücken 59 und 60 gemäss Fig. 15, die wiederum durch parallele Addition infolge der Parallelschaltung der Brücken 59 und 60 aus Fig. 15 entsteht. Dieses Signal ist proportional zu der aufgebrachten Last.

Wiederum unter der Annahme, dass die Empfindlichkeit der Dehnungsmessstreifen und der jeweiligen Balkenelemente identisch ist, lässt sich die Funktion der Waage bei exzentrischer oder aussermittiger Belastung wie folgt beschreiben. So wird z. B., wenn die Last im Punkt «B» der Fig. 1 aufgebracht wird, die Verteilung der Last, die durch die Balkenelemente erfasst wird, beträchtlich voneinander verschieden sein. Im vorhergehenden Fall der zentralen Belastung war jedes der Balkenelemente mit einem Viertel der Gesamtlast belastet. Im Fall der aussermittigen Belastung werden die Balkenelemente 13 und 14 den grössten Teil der aufgelegten Last aufnehmen. Die Balkenelemente 13 und 14 und deren zugehörige Dehnungsmessstreifen werden nur mit sehr geringer Last beaufschlagt. Aus diesem Grunde werden die Widerstandsänderungen und die resultierenden Ausgangssignale, die von den Dehnungsmessstreifen auf den Balkenelementen 11 und 12 erzeugt werden, deutlich geringer sein. Aber da die Empfindlichkeit der Balkenelemente und der zugehörigen Dehnungsmessstreifen identisch sind, werden die Gesamtsignale an den Ausgangsklemmen 62 gemäss Fig. 15 dennoch ein genaues Abbild der aufgelegten Last sein, obwohl diese aussermittig angreift. Das bedeutet, dass das Signal im Bezug auf die Summe oder das Mittel der einzelnen Lasten gleich bleibt. Ähnliche Resultate treten auf, wenn die Last im Punkt «C» der Fig. 1 oder einem beliebigen anderen Punkt auf der eigentlichen Waage angreift.

Sorgfältige Bearbeitung der Waagenkonstruktion 1 und der Loch- und Schlitzanordnungen 2, 3, 4, 5, die Auswahl von Dehnungsmessstreifen mit im wesentlichen identischen Empfindlichkeiten und präzise Anordnung dieser Dehnungsmessstreifen auf den entsprechenden Balkenelementen führt zu gutem Verhalten bei aussermittiger Belastung. Jedoch wird in manchen Anwendungen, wie im gewerblichen oder Handelsbereich, noch besseres Verhalten gefordert als es mittels der vorgenannten Vorsichtsmassnahme erzielt werden kann. Falls der Mittenfehler die zulässigen Grenzen übersteigt, kann er vermindert werden durch das Ändern der Querschnittsbemessung der Balkenelemente in den Ecken der Waage, wodurch die Empfindlichkeit gegen aussermittige Belastung in diesen Ecken niedriger ist als in der Ecke mit der höchsten Empfindlichkeit.

In der Praxis bewegt man die aufgelegte Last am Rand der Plattform und notiert die entsprechenden Ausgangssignale der Waage, während die Last im wesentlichen nacheinander in jeder Ecke der Plattform aufgelegt wird. Der Querschnitt der Balkenelemente mit dem niedrigen Ausgangssignal wird durch Schleifen verändert, womit die Balkendicke verringert wird durch das Abtragen von Material im inneren der Löcher 6, die dem Dehnungsmessstreifen benachbart sind, oder durch Abtragen von Material von der Seite des Balkens, die den Dehnungsmessstreifen gegenüberliegt. Nach dem ersten Abgleich wird der Eckenlastversuch wiederholt und wiederum die einzelnen Ausgangssignale notiert bei Anbrigen der Last in jeder der Ecken. Das Schleifen wird wiederholt, bis die gewünschte Eckenlast-Unempfindlichkeit erzielt ist. Mit einiger Übung kann der gesamte Abgleich mit 3 oder 4 Wiederholungen der obigen Prozedur erreicht werden.

Die Vorteile der vorgestellten Waagen ist besonders darin zu sehen, dass die Plattform und die Balkenelemente eine integrale Struktur bilden, die mittels der oben und nachfolgend beschriebenen Schritte einfach herzustellen ist. Ausserdem werden in Waagen der bisher bekannten Art vier Dehnungsmessstreifen für jeden Aufnehmer benötigt, Diese Erfindung benötigt andererseits nur 2 Dehnungsmessstreifen für jedes Balkenelement, das durch zwei Schlitze und vier Löcher geformt wird. Gewiss könnten auch vier Dehnungsmessstreifen in jedem Balkenelement verwendet werden, was jedoch unnötig ist.

Die Gesamthöhe der Waage kann beträchtlich verringert werden, weil die Balkenelemente direkt in der Plattformebene angeordnet sind. Die Nachgiebigkeit der Füsse und der Klammer, z. B. 47, verringern die Auswirkung von Stosslasten auf die vorgestellte Waage.

Ein weiterer Vorteil dieser Verkörperungen einer Waage ist es, dass die Herstellkosten stark verringert werden, denn Bohren und Sägen sind äusserst einfache Bearbeitungsmethoden, die ganz einfach mittels numerisch gesteuerter Werkzeugmaschinen ausgeführt werden können. Weiterhin ist wirtschaftliche Fertigung dadurch zu erreichen, dass eine Vielzahl von Plattformen gleichzeitig gefertigt wird. So können z. B. fünf bis zehn Platten gleichzeitig bearbeitet werden, wenn sie aufeinandergestapelt werden, so dass die Lochgruppen durch sämtliche Platten in einem Arbeitsvorgang gebohrt werden können. Wie erwähnt, können die Schlitze oder Öffnungen einfach gesägt statt gefräst werden, da die Empfindlichkeit der Balkenelemente in erster Linie durch die Lochabmessung und den Abstand benachbarter Löcher bestimmt wird und nicht durch die Breite der Schlitze. Das Bohren wird durch numerisch gesteuerte Bohroperationen präzise kontrolliert, so dass auch die Empfindlichkeit der Balkenelemente präzise zu erreichen ist. Auf diese Art werden die Herstellkosten der vorgestellten Waage drastisch verringert im Vergleich zu den Herstellkosten von Waagen der bisher bekannten Art.

Durch die richtige Wahl geeigneter Lochabmessungen und Lochabstände sowie der Plattenstärke können in einfacher Weise Nennlasten für Plattformwaagen im Bereich von 10 kg bis etwa 500 kg erzielt werden.

Waagen mit Nennlasten in diesem Bereich zeigen ausgezeichnete Genauigkeiten mit Linearitäts- und Hysteresefehlern von 0,02 %.

Weitere Details, wie z. B. Temperaturkompensation, elektrische Kalibrierung usw., die dem in der Technik bewanderten bestens bekannt sind, wurden übergangen im Interesse von Einfachheit und Klarheit.

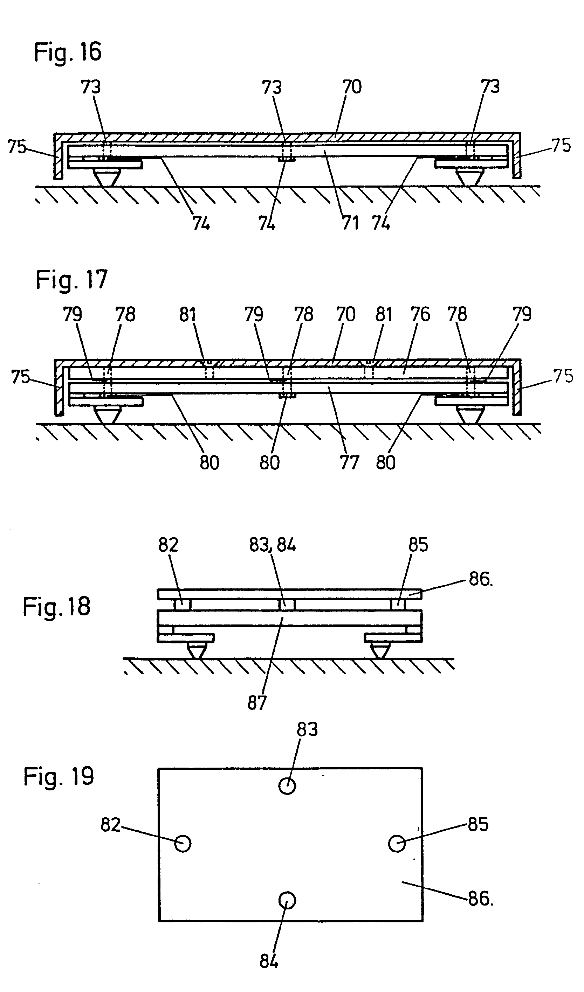

Fig. 16 und 17 zeigen andere Schutzmassnahmen. In Fig. 16 z. B. wird ein rechteckiges Gehäuse 70 aus dünnem Blech mit der Plattform 71 mittels angeschweisster Stutzen 73 befestigt. Die Stutzen 73 sind am Blechgehäuse 70 angeschweisst und Muttern 74 sind an den Stützen 73 montiert, die durch die Plattform 71 hindurchgehen und das Gehäuse sicher fixieren. Ein dünnes Blechgehäuse wie dieses kann bei Waagen geringer Nennlast verwendet werden. Die Kanten 75 des Gehäuses 70 haben genügend Abstand zum Boden oder Tisch, so dass die Verbiegung der Balkenelemente wie oben beschrieben nicht behindert wird.

Die Fig. 17 zeigt eine Waage mit höherer Nennlast, z. B. für Lasten über etwa 45 kg. Es hat sich als vorteilhaft gezeigt, eine Zwischenplatte 76 zur Lastverteilung an der Plattform 77 mittels Schrauben 78, Abstandsstücke 79 und Muttern 80 zu befestigen. Die Zwischenplatte 76 wird mit einer angemessenen Dicke gewählt, so dass sie die aufgebrachte Last hinreichend gut trägt, ohne wesentliche Durchbiegung. Ein rechteckiges Gehäuse 70 aus dünnerem Blech wie in Fig. 16 kann an der Zwischenplatte 76 mittels Schrauben 81 oder anderweitig befestigt werden.

Die Fig. 18 und 19 illustrieren die Lage bzw. Verteilung der Lastpunkte 82, 83, 84, 85 zwischen einer Zwischenplatte 86 zur Lastverteilung und einer mit Dehnungsmessstreifen versehenen Plattform 87. Die Gehäuseplatte ist in Fig. 18 nicht dargestellt. Die Zwischenplatte 86 kann mit der Plattform wie oben anhand der Fig. 16 und 17 beschrieben, verbunden werden.

Durch den Einbau der Zwischenplatte auf der Plattform werden die Effekte durch unsymetrische Belastung der Waage noch weiter verringert, im Vergleich zu einer Waage gleicher Art, jedoch ohne Zwischenplatte.

Die günstigste Anordnung der Punkte 82, 83, 84, 85 zur Verbindung der beiden Platten hängt ab von der Anordnung der Balkenelemente auf der mit Dehnungsmessstreifen versehenen Platte bzw. Plattform und hängt ab von der jeweiligen Länge, Breite und Dicke der mit Dehnungsmessstreifen versehenen Platte. Die beste Ausrichtung kann man leicht finden, wenn man einfache Abstandsstücke verwendet und sie umherbewegt zwischen den beiden Platten, solange, bis die günstigste Stelle gefunden ist. Die derart gefundenen Stellen gelten dann für alle Waagen der gleichen Bauart.

**Patentansprüche:**

1. Verfahren zur Herstellung einer Plattformwaage, bei dem Dehnungsmessstreifen (15 bis 22) auf mit einer Plattform (1) verbundenen Balkenelementen (11 bis 14) appliziert und zu einer Wheatstone'schen Brücke (59, 60) verschaltet werden, dadurch gekennzeichnet, dass in die Plattform (1) Gruppen von je vier Löchern (2 bis 5) gebohrt werden, die auf den Ecken eines Rechtecks liegen, dessen eine Kante oder dessen Kanten etwa parallel zur Begrenzung der Plattform (1) verlaufen, und dass für jede Lochgruppe (2 bis 5) zwei ein Schlitzpaar (7 bis 10) bildende Schlitze aus der Plattform (1) herausgearbeitet werden, welche von der Plattformkante über ein randnäheres Loch (6) bis zum randferneren Loch (6) verlaufen und dass die Dehnungsmessstreifen (15 bis 22) auf den von den Schlitzpaaren (7 bis 10) ausgeformten Balkenelementen (11 bis 14) jeweils etwa zwischen zwei Löchern (6) appliziert werden.

2. Verfahren nach Anspruch 1, dadurch gekennzeichnet, dass nach dem Applizieren der Dehnungsmessstreifen (15 bis 22) in Abhängigkeit von der Empfindlichkeit jedes Balkenelements (11 bis 14) Material von den Wandungen der Löcher (6) abgetragen wird.

3. Verfahren nach Anspruch 1, dadurch gekennzeichnet, dass nach dem Applizieren der Dehnungsmessstreifen (15 bis 22) in Abhängigkeit von der Empfindlichkeit jedes Balkenelements (11 bis 14) Material von der Oberfläche des Balkenelements (11 bis 14) abgetragen wird, die den Dehnungsmessstreifen (15 bis 22) gegenüberliegt.

4. Plattformwaage mit Balkenelementen (11 bis 14), die mit einer Plattform (1) verbunden sind, auf welche Dehnungsmessstreifen (15 bis 22) appliziert sind, die zu einer Wheatstone'schen Brücke (59, 60) verschaltet sind, dadurch gekennzeichnet, dass die Balkenelemente (11 bis 14) aus der Plattform (1) ausgeformt sind durch je zwei von der Plattformkante her aus der Plattform (1) geschnittene Schlitzpaare (7 bis 10) bildende Schlitze, an deren plattenrandfernen Enden je ein Loch (6) vorgesegen ist und die weiterhin durch je ein dem Plattenrand zugewandtes weiteres Loch (6) verlaufen, und dass die Dehnungsmessstreifen auf dem von den Schlitzpaaren (15 bis 22) ausgeformten Balkenelementen (11 bis 14) jeweils etwa zwischen zwei Löchern (6) appliziert sind.

5. Plattformwaage nach Anspruch 4, dadurch gekennzeichnet, dass die weiteren Löcher (6) etwa in der Mitte der Schlitze (7 bis 10) liegen.

6. Plattformwaage nach Anspruch 5, dadurch gekennzeichnet, dass die plattenrandnahen Enden der Balkenelemente (11 bis 14) über Abstandsstücke (24) und Klammern (25) mit Füssen (23) verbunden sind.

7. Plattformwaage nach Anspruch 6, dadurch gekennzeichnet, dass ein aus der Plattform (1) vorspringendes Teil (27) mit der Klammer (25) als Überlastsicherung zusammenarbeitet.

8. Plattformwaage nach Anspruch 6, dadurch gekennzeichnet, dass die Klammern (25, 47) breiter sind, als der Abstand zwischen den äusseren Begrenzungen zweier ein Balkenelement (11 bis 14) begrenzenden Schlitze eines Schlitzpaars (7 bis 10, 56).

9. Plattformwaage nach mindestens einem der Ansprüche 4 bis 8, gekennzeichnet durch eine Zwischenplatte (76), die mit der Plattform (1, 87) verbunden ist.

10. Plattformwaage nach Anspruch 9, gekennzeichnet, durch Abstandsstücke (79) zwischen Zwischenplatte (76) und Plattform (1, 87).

11. Plattformwaage nach mindestens einem der Ansprüche 4 bis 10 mit einer rechteckigen Plattform (1, 33, 35) dadurch gekennzeichnet, dass die Schlitzpaare (7 bis 10) im wesentlichen in der Nähe der Plattform (1, 33, 35) angebracht sind.

12. Plattformwaage nach Anspruch 11, dadurch gekennzeichnet, dass benachbarte Schlitz-Paare jeweils senkrecht aufeinanderstehen.

13. Plattformwaage nach Anspruch 11, dadurch gekennzeichnet, dass jeweils zwei Schlitz-Paare zueinander parallel verlaufen.

14. Plattformwaage nach Anspruch 11, dadurch gekennzeichnet, dass die Schlitz-Paare jeweils etwa in Richtung des Plattformschwerpunkts verlaufen.

15. Plattformwaage nach mindestens einem der Ansprüche 4 bis 10 mit einer Plattform (41), deren Begrenzung durch gekrümmte Linien gebildet wird, dadurch gekennzeichnet, dass vier Schlitz-Paare (42) vorhanden sind, die etwa senkrecht zur Begrenzungslinie der Plattform (41) verlaufen und wobei benachbarte Schlitz-Paare (42) jeweils senkrecht aufeinanderstehen.

16. Plattformwaage nach mindestens einem der Ansprüche 4 bis 15, gekennzeichnet, durch eine mit der Plattform (1) verbundene Schutzhaube (28).

**Claims**

1. A method of making a platform scale, in which strain gauges (15 to 22) are applied to beam elements (11 to 14) connected with a platform, and are connected to a Wheatstone bridge (59, 60), characterised in that groups of four holes (2 to 5) lying at the corner of a rectangle are bored in the plattform, one edge or the edges of the rectangle lying substantially parallel with the limits of the plattform, in that for each group of holes (2 to 5) two slits, forming a slit pair (7 to 10), are worked in the platform (1) extending from the hole (6) nearer the edge to the hole (6) further from the edge, and in that the strain gauges (15 to 22) are applied in each case to the beam elements (11 to 14) formed by the slit pairs (7 to 10) between two holes (6).

2. A method according to claim 1, characterised in that after application of the strain gauges (15 to 22), in dependence on the sensibility of each beam element (11 to 14), material is removed from the walls of the holes (6).

3. A method according to claim 1, characterised in that after the application of the strain gauges (15 to 22), independence on the sensitivity of each beam element (11 to 14), material is removed from the outher surface of the beam element (11 to 14), at a point immediately beneath the strain gauge (15 to 22).

4. A platform scale with beam elements (11 to 14) which are connected with a platform (1) and to which strain gauges (15 to 22) are applied, the gauges being connected to a Wheatstone bridge (59, 60), characterised in that the beam elements (11 to 14) are formed out of the platform (1) in each case by two slits forming slit pairs (7 to 10) cut into the platform (1) from the platform edges, a hole (6) being provided at the end of each slit further from the edge of the platform, the slit also passing through a further hole (6) closer to the plattform edge, and in that the strain gauges are applied on the beam elements (11 to 14) formed by the slit pairs (15 to 22), in each case between the two holes (6).

5. A platform scale according to claim 4, characterised in that the further holes (6) lie substantially in the middle of the slits (7 to 10).

6. A platform scale according to claim 5, characterised in that the ends of the beam elements (11 to 14) nearest to the platform edges are connected by means of spacer members (24) and brackets (25) to feet (23).

7. A platform scale according to claim 6, characterised in that a part (27) projecting from the platform (1) operates together with the bracket (25) as an overload safety device.

8. A platform scale according to claim 6, characterised in that the brackets (25, 47) are wider than the distance between the outer limits of two slits of a slit pair (7 to 10, 56) defining a beam element (11 to 14).

9. A platform scale according to at least one of claims 4 to 8 characterised by an intermediate plate (76) which is connected with the platform (1, 87).

10. A platform scale according to claim 9, characterised by spacer members (79) between the intermediate plate (76) and the platform (1, 87).

11. A platform scale according to at least one of claims 4 to 10 with a rectangular platform (1, 33, 35), characterised in that the slit pairs (7 to 10) are formed substantially in the region of the corners of the platform (1, 33, 35).

12. A platform scale according to claim 11, characterised in that neighbouring slit pairs in each case lie at right angles to one another.

13. A platform scale according to claim 11, characterised in that in each case two slit pairs lie parallel to one another.

14. A platform scale according to claim 11, characterised in that the slit pairs in each case run substantially in the direction towards the centre of gravity of the platform.

15. A platform scale according to at least one of claims 4 to 10 with a platform (41) whose limits are defined by curved lines, characterised in that four slit pairs (42) are provided running substantially perpendicular to the limit line of the platform (41) and wherein neighbouring slit pairs (42) each extend substantially perpendicular to each other.

16. A platform scale according to at least one of claims 4 to 15, characterised by a protective cover (28) connected with the platform (1).

**Revendications**

1. Procédé pour fabriquer une bascule à plate-forme, dans lequel des extensomètres (15 à 22) sont appliqués sur des éléments de poutre (11 à 14) reliés à une plate-forme (1) et sont câblés pour former un pont de Wheatstone (59, 60), caractérisé en ce qu'on perce dans la plate-forme (1) des groupes de respectivement quatre trous (2 à 5), situés sur les angles d'un rectangle, dont un bord, ou dont les bords sont sensiblement parallèles à la délimitation de la plate-forme (1), en ce que pour chaque groupe de trous (2 à 5) on usine dans la plate-forme (1) deux fentes formant une paire de fentes (7 à 10), qui s'étendent du bord de la plate-forme, traversent un trou (6) proche du bord et vont jusqu'à un trou (6) éloigné du bord, et en ce que les extensomètres (15 à 22) sont appliqués sur les éléments de poutre (11 à 14) formés par les paires de fentes (7 à 10), à chaque fois entre deux trous (6).

2. Procédé selon la revendication 1, caractérisé en ce qu'après l'application des extensomètres (15 à 22), on enlève de la matière des parois des trous (6) en fonction de la sensibilité de chaque élément de poutre (11 à 14).

3. Procédé selon la revendication 1, caractérisé en ce qu'après l'application des extensomètres (15 à 22), on enlève de la matière de la surface de l'élément de poutre (11 à 14) opposée aux extensomètres (15 à 22), en fonction de la sensibilité de chaque élément de poutre (11 à 14).

4. Bascule à plate-forme comportant des éléments de potre (11 à 14) reliés à une plate-forme (1), sur laquelle sont appliqués des extensomètres (15 à 22) câblés pour former un pont de Wheatstone (59, 60), caractérisé en ce que les éléments de poutre (11 à 14) sont formés à partir de la plate-forme (1) par des fentes constituant respectivement deux paires de fentes (7 à 10) découpées dans la plate-forme (1) à partir du bord de celle-ci, un trou (6) étant respectivement prévu sur leurs extrémités du bord de la plate-forme, et ces fentes s'étendant respectivement à travers un autre trou (6) plus proche du bord de la plate-forme, et en ce que les extensomètres (15 à 22) sont appliqués respectivement entre deux trous (6) sur l'élément de poutre (11 à 14) formé par les paires de fentes (7 à 10).

5. Bascule à plate-forme selon la revendication 4, caractérisée en ce que les autres trous (6) se trouvent sensiblement au milieu des fentes (7 à 10).

6. Bascule à plate-forme selon la revendication 5, caractérisée en ce que les extrémités des éléments de poutre (11 à 14) voisines du bord de la plate-forme sont reliées à des pieds (23) par l'intermédiare d'éléments entretoises (24) et de brides (25).

7. Bascule à plate-forme selon la revendication 6, caractérisée en ce qu'un élément (27) saillant de la plate-forme (1) coopère avec la bride (25) en tant qu'élément de sécurité de surcharge.

8. Bascule à plate-forme selon la revendication 6, caractérisée en ce que les brides (25, 47) sont plus larges que la distance entre les délimitations extérieures de deux fentes d'une paire de fentes (7 à 10, 56) délimitant un élément de poutre (11 à 14).

9. Bascule à plate-forme selon au moins l'une des revendications 4 à 8, caractérisée par une plaque intermédiaire (76) qui est reliée à la plate-forme (1, 87).

10. Bascule à plate-forme selon la revendication 9, caractérisée par des éléments entretoises (79) entre la plaque intérmediaire (76) et la plate-forme (1, 87).

11. Bascule à plate-forme selon au moins une des revendications 4 à 10, comportant une plate-forme rectangulaire (1, 33, 35), caractérisée en ce que les paires de fentes (7 à 10) sont placées sensiblement au voisinage des angles de la plate-forme (1, 33, 35).

12. Bascule à plate-forme selon la revendication 11, caractérisée en ce que des paires de fentes voisines sont respectivement perpendiculaires l'une à l'autre.

13. Bascule à plate-forme selon la revendication 11, caractérisée en ce que deux paires de fentes sont respectivement parallèles entre elles.

14. Bascule à plate-forme selon la revendication 11, caractérisée en ce que les paires de fentes s'étendent respectivement sensiblement en direction du centre de gravité de la plate-forme.

15. Bascule à plate-forme selon au moins l'une des revendications 4 à 10, comportant une plate-forme (41) dont la délimitation, est formée par des lignes incurvées, caractérisée en ce qu'il y a quatre paires de fentes (42) qui s'étendent sensiblement perpendiculairement à la ligne de délimitation de la plate-forme (41), des paires de fentes voisines (42) étant respectivement perpendiculaires entre elles.

16. Bascule à plate-forme selon au moins l'une des revendications 4 à 15, caractérisée par un capot protecteur (28) relié à la plate-forme (1).

0 034 656

Fig. 1

Fig. 2

Fig. 3

Dehnung

Last

Stauchung

Plattform

Plattform 1

Reaktionskraft

11

Fig. 4

Fig. 5

Fig. 6

Fig. 7

Fig. 8

Fig. 9

Fig. 12

Fig. 13

Fig. 11

Fig. 14

Fig. 15

Fig. 10

Fig. 16

73      73      70      73

75                                              75

74   74   71   74

Fig. 17

79   78   81   79   78   70   81   76   78   79

75                                                      75

80   80   77   80

82   83, 84   85

86.

Fig. 18

87

83

Fig. 19

82                                      85

86.

84